# EUROPEAN PATENT SPECIFICATION

(11) **EP 3 902 407 B1**
(45) Date of publication and mention of the grant of the patent: **08.10.2025**
(21) Application number: 19839154.2
(22) Date of filing: 20.12.2019
(51) Int. Cl.: A23K 20/163, A23K 40/00

(54) **PET FOODS COMPRISING GRAVY TOPPING COMPRISING METHYLCELLULOSE AND METHODS OF MAKING SUCH PET FOODS**
HAUSTIERFUTTER MIT METHYLCELLULOSEHALTIGER SAUCENGARNIERUNG UND VERFAHREN ZUR HERSTELLUNG DAVON
ALIMENTS POUR ANIMAUX DE COMPAGNIE COMPRENANT UN NAPPAGE DE SAUCE COMPORTANT DE LA MÉTHYLCELLULOSE ET PROCÉDÉS DE FABRICATION DE TELS ALIMENTS POUR ANIMAUX DE COMPAGNIE

(30) Priority: 24.12.2018 US 201862784610 P
(43) Date of publication of application: 03.11.2021
(60) Divisional application: 25173195.6
(73) Proprietor: Société des Produits Nestlé S.A., 1800 Vevey (CH)
(72) Inventor: ROUANET, Laurent, 80800 Villers-Bretonneux (FR); WATELAIN, Annie, 80300 Lavieville (FR); ROIG, Francisco, 80000 Amiens (FR); DESSAUVAGE, Julien, 59000 Lille (FR)
(74) Representative: Elkington and Fife LLP
(86) International application number: PCT/IB2019/061230
(87) International publication number: WO 2020/136536

(56) References cited:
- WO-A2-02/00036
- CN-A- 106 490 316
- US-A1- 2007 264 415

## Description

### FIELD

Provided herein are multi-layered pet food compositions and methods for making such pet food compositions.

### BACKGROUND

There are many pet food products on the market. The pet food products can be in a variety of shapes and structures such as kibbles, biscuits, rawhide products and meat emulsion products. Typically, these pet food products are homogenous in that they are usually made from the same materials throughout the product. Even pet food products that appear to be made from different materials are usually made by providing the same base materials with different colors to give the pet food products a multi-component appearance.

Multi-layered pet food products are very attractive for consumers but challenging for manufacturers. For example, in the pet food industry it is difficult to obtain a substantially flat top in a retorted product containing mousse or meat emulsion with a gravy topping, or chunk in jelly and a gravy topping.
US 2007/0264415 A1 relates to a process for manufacturing a multi-layer pet treat.
WO 02/000036 A2 relates to a feline pet food composition comprising a meat based material having an essentially solid mass.
CN 106490316 A relates to a fish food for pets.

Thus, there is a need in the industry for pet food products that have new and interesting textures and appearances to further stimulate consumer interest.

### SUMMARY

The invention relates to a method of making a multi-layered pet food comprising preparing a first edible composition that is a gravy comprising from about 0.1 weight % to about 5.0 weight % methylcellulose and from about 0.1 weight % to about 5.0 weight % galactomannan, at a first temperature, wherein the first temperature is from about 10°C to about 26°C; filling a first layer comprising gravy into a container; heating the container comprising the gravy to a second temperature to jellify the gravy; filling a second layer comprising a second edible composition into the container and on top of the first layer, wherein the first layer and the second layer are discrete layers.

The invention further relates to multi-layered pet foods comprising a first edible composition that is a gravy comprising about 0.1 weight % to about 5.0 weight % methylcellulose and about 0.1 weight % to about 5.0 weight % guar; and a second edible composition, wherein the first edible composition and the second edible composition are discrete layers.

Additional features and advantages are described herein, and will be apparent from the following Detailed Description and the Figures.

### BRIEF DESCRIPTION OF THE FIGURES

FIG. 1 is a graph of gravy viscosity vs. temperature for different gravy compositions according to Example 1.
FIG. 2 is a representative rheogram for gravy compositions comprising different amounts of methylcellulose and guar gum as describe in Example 2 herein.
FIG. 3 is a representative rheogram of the gravy and meat emulsion during the different process phases, filling of gravy into the container, gravy jellification then the cooking of the gravy and meat emulsion.
FIG. 4 depicts the jellification behavior for different gravy compositions described in Example 4 herein.
FIG. 5 is representative photographs of products from a metal can, the products comprising gravy toppings at different viscosities without methylcellulose on a base layer of meat emulsion, described in Example 5 herein.
FIG. 6 is representative photographs of products from plastic tubs, the products comprising toppings of gravies with methylcellulose on a base layer of meat/mousse, described in Example 6 herein.
FIG. 7 is representative photographs of products from a plastic tub (left) and a metal can (middle, right) comprising a topping of gravy comprising methylcellulose on a base layer of meat, described in Example 7 herein.

### DETAILED DESCRIPTION

### Definitions

Some definitions are provided hereafter. Nevertheless, definitions may be located in the "Embodiments" section below, and the above header "Definitions" does not mean that such disclosures in the "Embodiments" section are not definitions.

As used in this disclosure and the appended claims, the singular forms "a," "an" and "the" include plural referents unless the context clearly dictates otherwise. Thus, for example, reference to "a meat" includes two or more meats.

The term "and/or" used in the context of "X and/or Y" should be interpreted as "X," or "Y," or "both X and Y." Similarly, "at least one of X or Y" should be interpreted as "X," or "Y," or "both X and Y." Where used herein, the terms "example" and "such as," particularly when followed by a listing of terms, are merely exemplary and illustrative and should not be deemed to be exclusive or comprehensive. Any embodiment disclosed herein can be combined with any other embodiment disclosed herein unless explicitly stated otherwise.

The words "comprise," "comprises" and "comprising" are to be interpreted inclusively rather than exclusively. Likewise, the terms "include," "including" and "or" should all be construed to be inclusive, unless such a construction is clearly prohibited from the context.

However, the compositions disclosed herein may lack any element that is not specifically disclosed. Thus, a disclosure of an embodiment using the term "comprising" includes a disclosure of embodiments "consisting essentially of' and "consisting of' the components identified. Similarly, the methods disclosed herein may lack any step that is not specifically disclosed herein. Thus, a disclosure of an embodiment using the term "comprising" includes a disclosure of embodiments "consisting essentially of' and "consisting of' the steps identified. "Consisting essentially of' means that the embodiment comprises more than 50 wt.% of the identified components, preferably at least 75 wt.% of the identified components, more preferably at least 85 wt.% of the identified components, most preferably at least 95 wt.% of the identified components, for example at least 99 wt.% of the identified components.

As used herein, "about," "approximately" and "substantially" are understood to refer to numbers in a range of numerals, for example the range of -10% to +10% of the referenced number, within -5% to +5% of the referenced number, within -1% to +1% of the referenced number, or within -0.1% to +0.1% of the referenced number. Furthermore, all numerical ranges herein should be understood to include all integers, whole or fractions, within the range. Moreover, these numerical ranges should be construed as providing support for a claim directed to any number or subset of numbers in that range. For example, a disclosure of from 1 to 10 should be construed as supporting a range of from 1 to 8, from 3 to 7, from 1 to 9, from 3.6 to 4.6, from 3.5 to 9.9, and so forth.

All percentages expressed herein are by weight of the total weight of the composition unless expressed otherwise. When reference is made to the pH, values correspond to pH measured at 25 °C with standard equipment.

The term "pet" means any animal that could benefit from or enjoy the compositions provided by the present disclosure. For example, the pet can be an avian, bovine, canine, equine, feline, hircine, lupine, murine, ovine, or porcine animal, but the pet can be any suitable animal. The term "companion animal" means a dog or a cat.

The terms "food," "food product" and "food composition" mean a product or composition that is intended for ingestion by an animal, including a human, and provides at least one nutrient to the animal. The term "pet food" means any food composition intended to be consumed by a pet. "Dry food" is pet food having a water activity less than 0.75. "Semi-moist food" and "intermediate moisture food" is pet food having a water activity from 0.75 to 0.85. "Wet food" is pet food having a water activity more than 0.85. As used herein, a "multi-layered" pet food has a plurality of distinct layers which have different textures relative to each other and preferably have at least one different visual characteristic relative to each other such that a boundary between the layers is visible, and the distinct layers of the pet food do not mix into each other in at least ambient conditions, i.e., a temperature between 15°C and 25°C and a pressure about 100 kPa.

Unless defined otherwise, all technical and scientific terms, terms of art, and acronyms used herein have the meanings commonly understood by one of ordinary skill in the art in the field(s) of the present disclosure or in the field(s) where the term is used. Although any compositions, methods, articles of manufacture, or other means or materials similar or equivalent to those described herein can be used, the preferred devices, methods, articles of manufacture, or other means or materials are described herein.

### Embodiments

Described herein are multi-layered pet food compositions and methods of making multi-layered pet foods, as set forth in detail below.

An aspect of the present disclosure is a method of making a multi-layered pet food, the method comprising preparing a first edible composition, that is a gravy comprising from about 0.1 weight % to about 5.0 weight % methylcellulose and from about 0.1 weight % to about 5.0 weight % galactomannan, at a first temperature, wherein the first temperature is from about 10°C to about 26°C; filling a first layer comprising the gravy into a container; heating the container comprising the gravy to a second temperature to jellify the gravy; filling a second layer comprising a second edible composition into the container and on top of the first layer, wherein the first layer and the second layer are discrete layers.

The gravy comprises methylcellulose in an amount from about 0.1 weight % to about 5.0 weight %. In an embodiment, the gravy comprises methylcellulose in an amount from about 0.1 weight % to about 4.0 weight %. In another embodiment, the gravy comprises methylcellulose in an amount from about 0.1 weight % to about 3.0 weight %. In another embodiment, the gravy comprises methylcellulose in an amount from about 0.1 weight % to about 2.0 weight %. In another embodiment, the gravy comprises methylcellulose in an amount from about 1.0 weight % to about 2.0 weight %. In one embodiment, the gravy comprises methylcellulose in an amount of about 1.0 weight %. In one embodiment, the gravy comprises methylcellulose in an amount of about 1.25 weight % by weight. In another, embodiment the gravy comprises methylcellulose in an amount of about 1.4 weight %.

The gravy comprising methylcellulose and galactomannan is prepared at a first temperature from about 10°C to about 26°C. In some embodiments, the temperature at which the gravy is prepared and the temperature at which the gravy is filled into the container to form the first layer is about the same temperature. For example, from about 10°C to about 26°C. When the temperature of the gravy exceeds about 26°C during the preparing and/or the filling of the first layer, upon subsequent heating of the gravy to a second temperature, the jellification does not go to completion or the jellification does not occur to any extent.

In some embodiments of the method, the first layer comprising the gravy is from about 5 to about 20 % of the total weight of the pet food. In some embodiments, the first layer is from about 10 to about 14 % of the total weight of the pet food. In some embodiments, the first layer is from about 10 to about 13 % of the total weight of the pet food. In some embodiments, the first layer is from about 10 to about 12 % of the total weight of the pet food. In some embodiments, the first layer is about 10 %, about 11 %, about 12 %, about 13 %, about 14 %, about 15 % of the total weight of the pet food.

In some embodiments of the method, the container includes, but is not limited to, bags, boxes, pouches, cartons, jars, bottles, cans, or tubs. In some embodiments, the container can be made of materials including, but not limited to, plastic, metal, metal alloy, paper, polymer, glass or combinations thereof. In one embodiment, the container is a metal can. In one embodiment, the container is a plastic tub. The container can be any suitable shape, including, but not limited to, a cube, a cylinder, circular, oval, square, or rectangular. The container can be symmetrical or asymmetrical.

In some embodiments of the method, the heating can occur in the same location as the filling. For example, the filling can occur at a location and the heating can be performed at the same location as the filling without the need for transporting the container to a second location for heating. In some embodiments, the method further comprises transporting the container from a filling location into a heating zone comprising a heat source after the filling of the first layer and prior to the heating.

The heating of the container comprising the gravy can increase the temperature of the gravy by about 20°C to about 44°C, for example from a first temperature of about 10°C to about 26°C to a second temperature of about 30°C to about 70°C. In some embodiments, the temperature of the gravy during heating is not uniform throughout the gravy. For example, a temperature gradient can exist in the gravy during the heating. In some embodiments, a lower portion of the gravy (e.g. the portion closest to the heat source) can have a temperature from about 60°C to about 70°C and an upper portion of the gravy can have temperature from about 40°C to about 50°C.

In one embodiment of the method, the heating of the gravy can be accomplished with any heat source used in the food industry including but not limited to microwaves, steam, hot air, hot water bath, hot plate or infrared radiation. It is appreciated that the heat source employed is generally compatible with the material that the container is constructed from. As a non-limiting example, infrared heating can be used to heat 5 g to 20 g of gravy in the container from about 20°C to about 70°C in about 10 seconds to about 80 seconds. In another non-limiting example, the infrared heating can be used to heat about 7 g of gravy in the container from about 20°C to about 65°C in about 75 seconds. In an embodiment, the gravy in the container does not undergo a cooling step before the second edible composition is added.

In one embodiment, the container is not significantly damaged during the heating. For example, the container is not melted, deformed, and/or the integrity of the container is not otherwise compromised. For example, when microwave energy is used for the heating the container is preferably plastic.

In one embodiment, the method comprises a heat source that is an infrared heat source. In some embodiments, the heat source is configured below the container comprising the gravy. In some embodiments, the heat source is configured in a heating zone, below the container comprising the gravy, wherein the heating zone is separate and downstream from the location of the filling of the first layer comprising gravy. In some embodiments, the heat source is an infrared heat source including, but not limited to, heat lamps, quartz lamps, quartz tubes, metal sheath elements, ceramic elements, glass or metal panels. In one embodiment, the heat source is an infrared lamp.

In some embodiments of the method, the heat source comprises a plurality of infrared lamps. In some embodiments, the heat source comprises two infrared lamps, three infrared lamps, four infrared lamps, five infrared lamps, or six infrared lamps. In some embodiments, the heat source comprises up to seventy-two infrared lamps.

In some embodiments, the total power provided by the heat source is from about 180 kW to about 200 kW. In one embodiment, the total power provided by the heat source is about 198 kW. For example, in one embodiment, a plurality of infrared lamps each provide about 2kW, about 3 kW or about 5 kW of power.

In some embodiments of the method, the heat source is part of a heating unit comprising additional components. For example, in some embodiments, the infrared lamp may be part of a heating unit that includes an enclosure enclosing the infrared lamp to protect and support cleaning operations of the infrared lamp. In some embodiments, heating unit further comprises a high temperature resistant glass on the top of the heating unit (e.g. NEXTREMA GLASS available from SCHOTT). The high temperature resistant glass typically has a transmission profile that is compatible with the heat source. For example, the glass can be optimized for transmission in the infrared range when the heat source is an infrared heat source. In some embodiments, the heating unit further comprises a cooling unit to cool the heat source. For example, the heating unit can comprise fans or other sources of air flow to cool the infrared lamps.

In some embodiments of the method, the heating zone further comprises a heating unit comprising a heat source. In some embodiments, the heating zone comprises a plurality of heating units. For example, the heating zone comprises a plurality of heating units comprising the heat source. In some embodiments, the heating zone comprises one heating unit, two heating units, three heating units, four heating units, five heating, or six heating units. In some embodiments, each heating unit comprises multiple heat sources (e.g. each heating unit can comprise 2, 4, 6, 8, 10 or 12 infrared lamps). The heating zone comprising the heating units can be configured in any one of a plurality of configurations. For example, the heating zone can comprise three heating units configured end to end (e.g. with a dimension of one heating unit by 3 heating units). In another exemplary embodiment, the heating zone comprises six heating units with a dimension of two heating units by three heating units.

In some embodiments of the method, the container can be conveyed horizontally through the heating zone and above the heating unit. In some embodiments, the speed at which the container is conveyed horizontally through the heating zone defines a residence time of the container in the heating zone. In some embodiments, the residence time of the container in the heating zone depends upon the power setting of the heat source and the throughput of the system as defined by cycles/unit time (e.g. determined by the speed of the containers through the heating zone). In one embodiment, the residence time of a container comprising gravy in the heating zone is from about 2 minutes to about 3 minutes. In one embodiment, the residence time of a container comprising gravy in the heating zone is about 2 minutes 5 seconds, 2 minutes 10 seconds, about 2 minutes 15 seconds, about 2 minutes 20 seconds, about 2 minutes 25 seconds, about 2 minutes 30 seconds about 2 minutes 35 seconds, about 2 minutes 40 seconds, about 2 minutes 45 seconds, about 2 minutes 50 seconds, about 2 minutes 55 seconds.

The throughput can be determined by processing time and by the numbers of rows of containers and the number of containers in within each row. In some embodiments, the throughput can be 200-300 containers/min. In some embodiments, the throughput can be 225-275 containers/min. In one embodiment, the throughput can be 250 containers/min. For example, the method can comprise 10 rows of containers wherein each row has 25 containers, a throughput of 250 containers/minute. In one embodiment, 10 filled and sealed containers exit the system every 2 seconds.

In addition to a heating zone comprising a heating unit comprising a heat source, the method can further comprise a cooling unit configured to cool an upper section of the container (e.g. a section that does not contain or that is not in contact with the gravy, jelly or meat emulsion). The cooling unit can be ducted air directed towards the upper section of the container. The cooling unit can provide the ducted air directed towards the upper section of the container at the same time that the heat source is heating the container comprising the gravy from below. In some embodiments, the upper section of the container that does not contain or that is not in contact with the gravy, jelly or meat emulsion does not exceed a temperature of about 90°C or about 95°C during the heating in the heating zone.

In some embodiments of the method, once the heating is completed (e.g. the gravy is heated to a second temperature and has become a jelly), the container can be conveyed further downstream to a non-heating zone where the second layer comprising a second edible composition is dispensed into the container and on top of the jelly. In some embodiments, the second edible composition is pre-cooked to a temperature from about 40°C to about 70°C prior to the filling of the second layer. In some embodiments, the second edible composition has a temperature from about 40°C to about 70°C during the filling of the second layer.

The gravy further comprises galactomannan in an amount from about 0.1 weight% to about 5.0 weight%. In some embodiments, the galactomannan is selected from the group consisting of fenugreek gum, guar gum, tara gum, locust bean gum and cassia gum. In one embodiment, the galactomannan is guar gum. In some embodiments, the gravy comprises guar gum in an amount from about 0.1 weight % to about 5.0 weight %. In one embodiment, the gravy comprises guar gum in an amount from about 0.1 weight % to about 4.0 weight %. In another embodiment, the gravy comprises guar gum in an amount from about 0.1 weight % to about 3.0 weight %. In another embodiment, the gravy comprises guar gum in an amount from about 0.1 weight % to about 2.5 weight %. In another embodiment, the gravy comprises guar gum in an amount from about 1.0 weight % to about 2.0 weight %. In another embodiment, the gravy comprises guar gum in an amount from about 0.8 weight % to about 1.4 weight %. In one embodiment, the gravy comprises guar gum in an amount of about 0.8 weight %, about 1.0 weight %, about 1.4 weight %, or about 1.7 weight %.

In some embodiments, the second temperature is from about 30°C to about 70°C. In another embodiment, the second temperature is from about 60°C to about 70°C. In one embodiment, the second temperature is from about 60°C to about 65°C.

In some embodiments, the combination of methylcellulose and galactomannan, e.g. guar gum, enables the onset and/or completion of the jellification of the gravy at a lower second temperature. For example, the combination of methylcellulose and guar provides an onset of jellification from about 55°C to about 65°C. In other embodiments, the combination of methylcellulose and guar provides an onset of jellification of about 55°C, about 60°C or about 65°C. In some embodiments, the combination of methylcellulose and galactomannan, e.g. guar gum provides completion of jellification at a lower temperature. In some embodiments, with the combination of methylcellulose and guar the jellification is substantially complete at about 65°C, about 70°C or about 75°C.

In an embodiment, the gravy can further comprise an additional component. In some embodiments the additional component, enables the onset and/or completion of the jellification of the gravy at a lower temperature. In some embodiments, the additional component enables a temperature for onset and/or completion of jellification even lower than that achieved with the combination of methylcellulose and guar in the absence of the additional component. In some embodiments, the gravy can further comprise an additional component in an amount of less than or about 10.0 weight %. In some embodiments, the additional component can be selected from a salt, a sugar, an amino acid or combinations thereof. In one embodiment, the additional component is a salt. In some embodiments, the salt can be NaCl or trisodium diphosphate (TSDP) or combinations thereof. In some embodiments, the salt is present in an amount of less than or about 10 weight %. In some embodiments, the salt is present in an amount of less than or about 4.0 weight %. In some embodiments, the salt is present in an amount of less than or about 3.0 weight %. In some embodiments, the salt is present in an amount of less than or about 2.0 weight %. In another embodiment, the salt is present in an amount of less than or about 1.0 weight %. In some embodiments, the additional component is a sugar. In some embodiments, the sugar can be burnt sugar. In some embodiments, the sugar is present in an amount of less than or about 4.0 weight %, in some embodiments, the sugar is present in an amount of less than or about 3.0 weight %, in an amount of less than or about 2.0 weight %, or in an amount of less than or about 1.0 weight %. In some embodiments, the additional component is an amino acid. In some embodiments, the amino acid is present in an amount of less than or about 4.0 weight %, in some embodiments, the amino acid is present in an amount of less than or about 3.0 weight %, in an amount of less than or about 2.0 weight %, or in an amount of less than or about 1.0 weight %.

In some embodiments, the method can further comprise sealing the container comprising the gravy and the second edible composition and then retorting the sealed container. For example, the sealed container can be retorted by subjecting the sealed container to heat treatment at a temperature from about 121°C to about 128°C for about 10 to about 60 minutes. The retorted container can be cooled, for example to ambient temperature. In some embodiments, the temperature to which the retorted container is cooled can be a function of the water temperature supplied to the cooling operation. For example, in one embodiment the retorted container can be cooled to a temperature of about 35°C.

The invention further relates to a multi-layered pet food. The multi-layered pet food can be formulated for a pet such as a companion animal, for example according to the standards of The Association of American Feed Control Officials (AAFCO).

The order of filling the gravy and the second edible composition in the container ensures that the gravy rests on and/or covers the upper surface of the second edible composition when the container is opened and the pet food is removed from the container by flipping the container over so that the opening faces downward towards a serving apparatus.

In various embodiments, the weight ratio of the gravy to the second edible composition can be about 10:90 to about 50:50, from about 12:88 to about 45:55, or from about 20:80 to about 40:60. The methylcellulose can be substantially the only hydrocolloid in the gravy (i.e., the hydrocolloids in the gravy can consist essentially of or consist of the methylcellulose); and when guar gum is included in the gravy, the methylcellulose and the guar gum can be substantially the only hydrocolloid in the gravy (i.e., the hydrocolloids in the gravy can consist essentially of or consist of the methylcellulose and the guar gum).

In some embodiments, the first layer comprising the first edible composition that is gravy and the second layer comprising the second edible composition are discrete layers. In some embodiments, a flat upper surface of the second edible composition abuts the gravy in the container. The term "upper" or "top" means the highest point of elevation of the second edible composition when the second edible composition is removed from a container and placed on a serving apparatus, i.e., the upper surface of the second edible composition is the surface of the second edible composition most distant from the opening of the container. As used herein, a surface is "flat" if at least about 70% of the surface is coplanar; at least about 80% of the surface is coplanar, at least about 90% of the surface is coplanar, or about 100% of the surface is coplanar. For example, if the container is a cylindrical can, the flat upper surface of the second edible composition can be substantially parallel to the opening of the container.

Non-limiting examples of suitable containers include metal cans (e.g., 3 oz. 85 g cans), plastic trays, tubs, seamed containers (e.g., a seamed can in which a can end is interlocked with a can body), flexible pouches, glass jars, or retortable rigid plastic containers. The present disclosure is not limited to a specific embodiment of the container, and the container is any container that can receive the gravy and second edible composition and then withstand retorting conditions. For containers seamed by a rotating seamer, the gravy can jellify during seaming and advantageously maintain the flat surface of the second edible composition by which the second edible composition abuts against the gravy in the container.

The gravy can contain edible ingredients in addition to the methylcellulose and galactomannan, for example, one or more flavors such as chicken flavor, beef flavor, fish flavor, vegetable flavor, or burnt sugar; one or more colorants; one or more visible nutrition ingredients such as spinach, carrots, or cranberries; and/or one or more condiments such as parsley or oregano. The additional edible ingredients can be added to the gravy before, during or after the addition of the methylcellulose.

In an embodiment, the second edible composition is a loaf-type product, such as a mousse or meat emulsion. A mousse is an aerated food product that can be sweet or savory and can be stabilized with gelatin or agar. A sweet mousse can be made with whipped egg whites or whipped cream and can be flavored with puréed fruits or an herb or spice, such as mint or vanilla. A savory mousse can be made from meat, fish, shellfish, cheese or vegetable. **In** some embodiments, second edible composition, e.g. the loaf-type product, mousse or meat emulsion, further comprises a hydrocolloid. For example, the second edible composition can comprise a locust bean gum. In some embodiments, the hydrocolloid from the second edible composition may be released to some degree into the first edible composition during retorting.

As used herein, a loaf-type product is a pet food having a structure that is maintained, during and after removal from the container at ambient temperature and ambient pressure, the shape is imparted on the loaf-type product by the container. For example, a loaf-type product removed from a cylindrical can will have a cylindrical shape having a horizontal cross-section with substantially the same dimensions as a corresponding horizontal cross-section of the interior of the can. In one embodiment, the second edible composition in the pet food disclosed herein is a loaf-type pet food and has no free gravy after removal from the container, i.e., at least a portion of the gravy is positioned on the top surface of the loaf-type pet food and the remainder of the gravy, if any, is positioned on the lateral sides of the loaf-type pet food, not the serving apparatus. In one embodiment, the gravy is positioned only on the top surface of the loaf-type pet food after removal from the container. In some embodiments, the gravy is positioned only on the top surface of the loaf-type pet food immediately after removal from the container and for a period of time, and then the gravy cascades at least partially down one or more sides of the loaf-type pet food.

There follows a description of a system (e.g. a continuous production line) capable of producing the container comprising the multi-layered pet food comprising the gravy and the second edible composition. In one embodiment, the system comprises a loading station, a first filler configured to dispense a first layer comprising a first edible composition into the container, a heating unit comprising a heat source arranged to heat the container containing the first edible composition, a second filler configured for dispensing the second edible composition into the container and on top of the first layer, a weighing station for weighing the container comprising the first layer and the second layer. The filled container can then be sealed or closed by an appropriate lid setting device, such as a rotating seamer, and then conveyed to a steamer/retorting station. A conveyor belt can be used to transport the container from one station to another station of the continuous production line. In some embodiments, the system may further comprise a second weighing station positioned after the filling of the first layer and before the filling of the second layer. The second weighing station can be configured to record a weight of the container comprising the gravy prior to or after the heating.

In some embodiments, the system can comprise any heat source generally used in the food industry (e.g. pet food or human food) including but not limited to microwaves, steam, hot air, hot water bath, hot plate or infrared radiation. It is appreciated that the heat source employed is generally compatible with the material that the container is constructed from. In one embodiment, the container is not significantly damaged during the heating. For example, the container is not melted, deformed, and/or the integrity of the container is not otherwise compromised. For example, when microwave energy is used for the heating the container is preferably plastic.

As a non-limiting example, an infrared heat source can be used to heat 5 g to 20 g of gravy in the container from a first temperature of about 20°C to a second temperature of about 70°C in about 10 to about 180 seconds. In another non-limiting example, the infrared heat source can be used to heat about 5 g to about 20 g of the gravy in the container from a first temperature of about 20°C to a second temperature of about 70°C in about 60 to about 180 seconds. In another non-limiting example, the infrared heat source can be used to heat about 7 g of gravy in the container from a first temperature of about 20°C to a second temperature of about 65°C in about 120 seconds. In an embodiment, the gravy in the container does not undergo a cooling step before the second edible composition is added.

In one embodiment, the system comprises a heat source that is an infrared heat source. In some embodiments, the infrared heat source is configured below the container comprising the gravy. In some embodiments, the heat source is configured in a heating zone, below the container comprising the gravy, wherein the heating zone is separate and downstream from the location of the filling of the first layer comprising gravy. In some embodiments, the infrared heat source includes, but is not limited to, heat lamps, quartz lamps, quartz tubes, metal sheath elements, ceramic elements, glass or metal panels. In one embodiment, the heat source is an infrared lamp.

In some embodiments of the system, the heat source comprises a plurality of infrared lamps. In some embodiments, the heat source comprises two infrared lamps, three infrared lamps, four infrared lamps, five infrared lamps, six infrared lamps, seven infrared lamps, eight infrared lamps, nine infrared lamps, ten infrared lamps, eleven infrared lamps or twelve infrared lamps. In some embodiments, the heat source comprises up to seventy-two infrared lamps.

In some embodiments of the system, the heat source is a component of a heating unit. In some embodiments of the system, the heating unit comprising the heat source (e.g. an infrared heat source, for example an infrared lamp) comprises additional components. For example, in some embodiments, the heating unit can include an enclosure enclosing the heat source to protect and support cleaning operations of the heat source. In some embodiments, the heating unit further comprises a high temperature resistant glass (e.g. NEXTREMA GLASS available from SCHOTT). The high temperature resistant glass typically has a transmission profile that is compatible with the heat source. For example, the glass can be optimized for transmission in the infrared range when the heat source is an infrared heat source. In one exemplary embodiment, the heating unit comprises an infrared lamp and a high temperature resistant glass on top of the heating unit that is optimized for transmission in the infrared range. In some embodiments, the heating unit further comprises a cooling system to cool the heat source. The heating units can be configured in any one of a plurality of configurations. For example, the heating units can be configured end to end (e.g. with a dimension of one heating unit by three heating units). In another exemplary embodiment, the heating units can be configured with a dimension of two heating units by three heating units.

In some embodiments, the total power that can be provided by the heat source is about from about 180 to about 200 kW. In one embodiment, the total power that can be provided by the heat source is about 198 kW. For example, a plurality of infrared lamps can each provide about 2 kW, about 3 kW or about 5 kW of power.

In addition to a heating unit comprising a heat source, the system can further comprise a cooling unit configured to cool an upper section of the container (e.g. a section that does not contain or that is not in contact with the gravy, jelly or meat emulsion). The cooling unit can be ducted air directed towards the upper section of the container. The cooling unit can direct the ducted air towards the upper section of the container at the same time that the heating unit comprising the heat source is heating the container comprising the gravy from below. In some embodiments, the upper section of the container that does not contain or that is not in contact with the gravy, jelly or meat emulsion does not exceed a temperature of about 90°C or about 95°C during the heating in the heating zone.

In some embodiments, the system can further comprise a mechanical mixer for combining the ingredients of the gravy, i.e., at least methylcellulose and a liquid such as water, which further comprises galactomannan such as guar gum.

In some embodiments, the system can further comprise a component for sealing the container comprising the gravy and the second edible composition and then retorting the sealed container. For example, the sealed container can be retorted by subjecting the sealed container to heat treatment at a temperature from about 121°C to about 128°C for about 10 to about 60 minutes. The retorted container can be cooled, for example to ambient temperature. In some embodiments, the temperature to which the retorted container is cooled can be a function of the water temperature supplied to the cooling operation. For example, in one embodiment the retorted container can be cooled to a temperature of about 35°C.

### EXAMPLES

The following non-limiting examples are illustrative of embodiments provided by the present disclosure and advantages thereof.

### Example 1

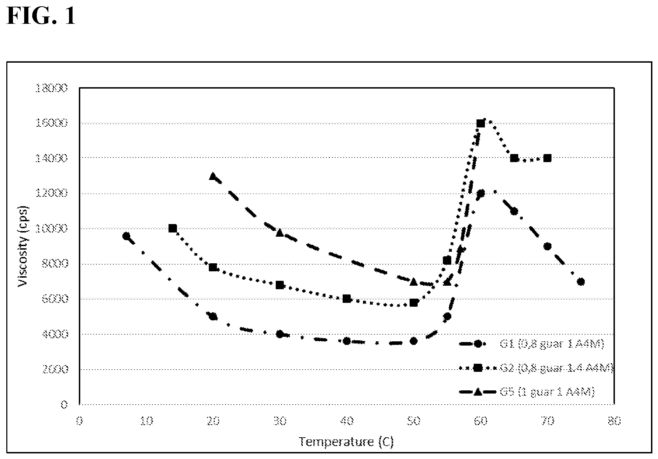

Viscosity analysis was performed on three different gravies having the same base formulation, including an aroma system, but containing different amounts of methylcellulose (Benecel A4M from Ashland) and guar gum. All gravies were prepared at an initial temperature from 20°C to 26°C. The first sample contained 1.0 % by weight methylcellulose and 0.8 % by weight guar gum. The second sample contained 1.4 % by weight methylcellulose and 0.8 % by weight guar gum. The third sample contained 1.0 % by weight methylcellulose and 1.0 % by weight guar gum. The graph in FIG 1. depicts the viscosity of the different gravies as a function of temperature and demonstrates the rapid jellification between 55°C and 60°C.

### Example 2

The jellification behavior of several gravies with and without methylcellulose and guar gum was tested using oscillatory measurement using a rheometer. The modulus was a 20 mm steel parallel plate with a gap of 1000 µm, in a high pressure cell to maintain the gravy moisture. The method parameters for heating were deformation 1% strain and frequency 1 Hz, ramp temperature: 25°C to 120°C at a rate of 2°C min. with 200 points. The method parameters for cooling were deformation 1% strain and frequency 1 Hz, ramp temperature: 120°C to 20°C at a rate of 5°C min. with 200 points. The parameters recorded were: G' Rigidity Modulus in Pascals, G" Viscous Modulus in Pascals, wherein Tan(delta)=G"/G'.

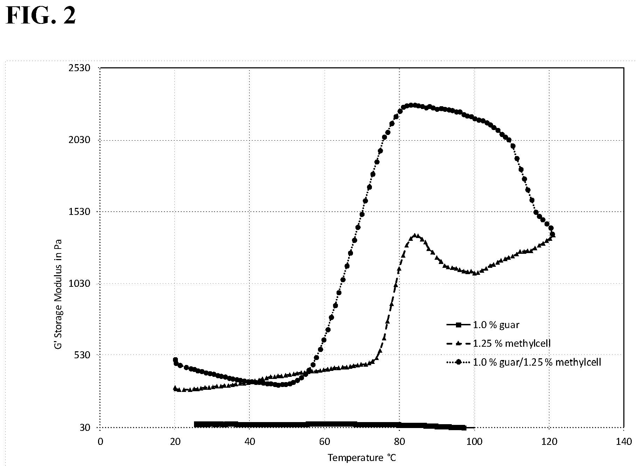

Three gravies with the same base formulation, but different amounts of methylcellulose and guar gum were tested using the parameters described above. The first sample contained 1.0 wt. % guar gum with no methylcellulose, the second sample contained 1.25 wt. % methylcellulose with no guar gum and the third sample contained of 1.0 wt. % guar with 1.25 wt. % methylcellulose. The compositions were analyzed in a complete rheogram (heating and cooling phase). FIG. 2 depicts the rheogram of G'rigidity modulus as a function of temperature during the heating phase for the different compositions. The composition containing the combination of methylcellulose and the guar gum shows rapid jellification between 60°C and 71°C; whereas the composition containing only methylcellulose shows jellification at a higher temperature and the composition containing only guar gum does not show any jellification.

### Example 3

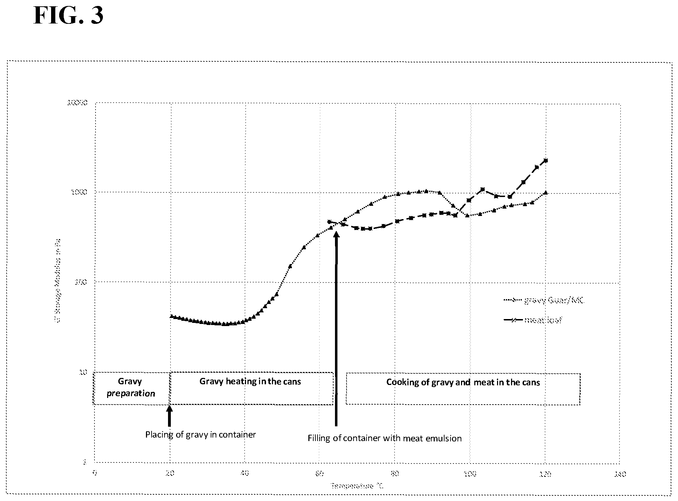

The G' storage modulus of a gravy composition containing 1.0 wt.% methylcellulose and 1.4 wt. % guar gum was compared to that of a meat emulsion during retorting. During the initial heating phase, the gravy starts to jellify at 60°C and the gel is formed up to 71°C. After this temperature, the gel is stable to 100°C. The meat emulsion is precooked at 60°C, ground and is then add on top of the jellified gravy. FIG. 3 shows that the G' storage modulus of the jelly and the meat are very closed so the jelly structure will not be impacted by the addition of meat emulsion and the jelly will thus keep its structure after retorting at 120°C.

### Example 4

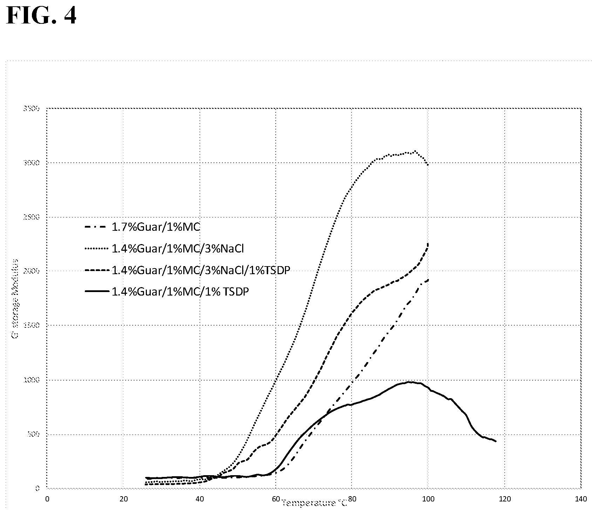

The behaviors of gravy compositions containing methylcellulose and guar gum with and without the further addition of a salt were investigated. The first sample contained 1.0 weight % methylcellulose and 1.7 weight % guar gum. The second sample contained 1.0 weight % methylcellulose, 1.4 weight % guar gum and 3.0 weight % NaCl. The third sample contained 1.0 weight % methylcellulose, 1.4 weight % guar gum, 3.0 weight % NaCl and 1.0 weight % trisodium diphosphate (TSDP). The fourth sample contained 1.0 weight % methylcellulose, 1.4 weight % guar gum, and 1.0 weight % TSDP. The onset of jellification occurs at a lower temperature for compositions containing salt in addition to the methylcellulose and guar gum as depicted in the rheogram in FIG. 4.

### Reference Example 5

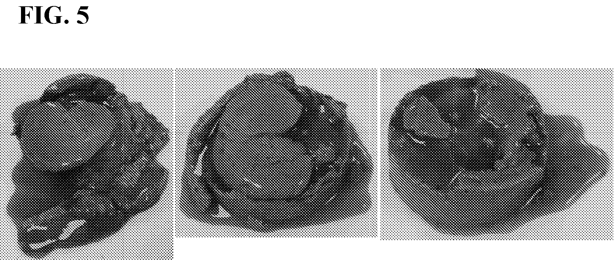

Trials were conducted to investigate the appearance of products containing gravy without methylcellulose along with a base layer of meat emulsion in 85 g aluminum cans. In each case, the gravy, at a temperature from 20°C to 26°C, was dispensed into a can a meat emulsion was layered on top of the gravy. The can was sealed and retorted at 120°C. The can was cooled, opened and inverted to release the product contained within. The products prepared in this way did not maintain the meat emulsion and gravy as distinct layers as seen in FIG. 5.

### Reference Example 6

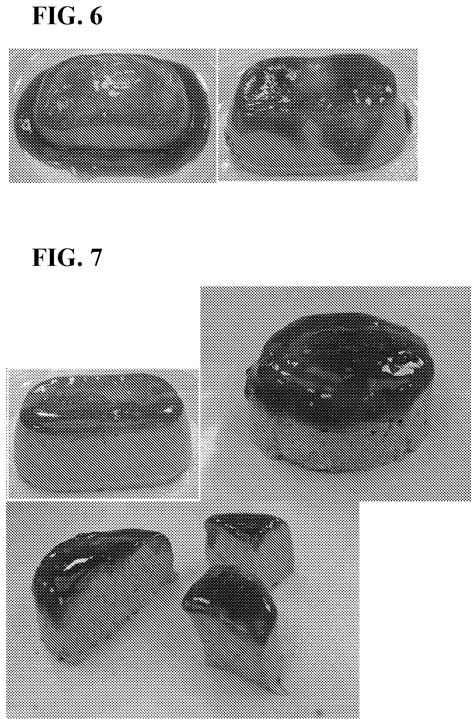

Additional trials were performed as describe in Example 5, but in another type of container (280 g plastic tubs). The meat emulsion had a slightly different recipe than in Example 5, but still did not contain methylcellulose. The meat emulsion did not maintain a substantially flat surface with the gravy on top after demoulding as seen in FIG. 6.

### Example 7

Additional trials were performed as described in Example 5, but with gravies containing 1.0 wt. % methylcellulose, 1.4 wt. % guar gum, and 1.0 weight % burnt sugar. In these cases, two distinct layers were maintained, the top of the base layer was very flat and the gravy remained on top of the base layer. The trial was successfully repeated using 280 g plastic tubs (left) and 85 g aluminum cans (middle, right) as shown in FIG 7.

## Claims

1. A method of making a multi-layered pet food comprising:
preparing a first edible composition that is a gravy comprising from about 0.1 weight % to about 5.0 weight % methylcellulose and from about 0.1 weight % to about 5.0 weight % galactomannan, at a first temperature, wherein the first temperature is from about 10°C to about 26°C;
filling a first layer comprising the gravy into a container;
heating the container comprising the gravy to a second temperature to jellify the gravy;
filling a second layer comprising a second edible composition into the container and on top of the first layer, wherein the first layer and the second layer are discrete layers.

2. The method according to Claim 1, further comprising transporting the container from a filling location into a heating zone after the filling of the first layer and prior to the heating, preferably wherein the heating zone comprises an infrared heat source, more preferably wherein the infrared heat source is configured below the container.

3. The method according to Claim 1, further comprising transporting the container into a non-heating zone after the heating and before the filling of the second layer.

4. The method according to Claim 1, wherein the galactomannan is guar.

5. The method according to Claim 1, wherein the gravy further comprises an additional component in an amount of less than or about 10 weight %.

6. The method according to Claim 5, wherein the additional component is selected from the group consisting of a salt, a sugar, an amino acid and mixtures thereof.

7. The method according to Claim 1, wherein the second temperature is from about 30°C to about 70°C.

8. The method according to Claim 1, wherein the first layer is from about 5 % to about 20 % of the total weight of the pet food.

9. The method according to Claim 1, further comprising sealing the container comprising the first layer and the second layer and preferably further comprising retorting the sealed container.

10. The method according to Claim 1, wherein the second edible composition is selected from a loaf-type food, a meat emulsion, and a mousse.

11. The method according to Claim 1, wherein the second layer comprising the second edible composition is substantially covered by the first layer comprising the gravy when the container is inverted and the pet food is released from the container.

12. A multi-layered pet food comprising:
a first edible composition that is a gravy comprising about 0.1 weight % to about 5.0 weight % methylcellulose and about 0.1 weight % to about 5.0 weight % guar; and
a second edible composition, wherein the first edible composition and the second edible composition are discrete layers.

13. The multi-layered pet food according to claim 12 wherein the second edible composition is a meat emulsion.

14. The multi-layered pet food according to claim 12 wherein the weight ratio of the first edible composition to the second edible composition is from about 20:80 to about 40:60.

## Patentansprüche

1. Verfahren zum Herstellen eines mehrschichtigen Haustierfutters, umfassend:
Zubereiten einer ersten essbaren Zusammensetzung, die eine Soße ist, umfassend von zu etwa 0,1 Gew.-% bis etwa 5,0 Gew.-% Methylcellulose und von zu etwa 0,1 Gew.-% bis etwa 5,0 Gew.-% Galactomannan bei einer ersten Temperatur, wobei die erste Temperatur von etwa 10 °C bis etwa 26 °C beträgt;
Füllen einer ersten Schicht, umfassend die Soße, in einen Behälter;
Erhitzen des Behälters, umfassend die Soße, auf eine zweite Temperatur, um die Soße gelieren zu lassen;
Füllen einer zweiten Schicht, umfassend eine zweite essbare Zusammensetzung, in den Behälter und auf die erste Schicht, wobei die erste Schicht und die zweite Schicht diskrete Schichten sind.

2. Verfahren nach Anspruch 1, ferner umfassend ein Transportieren des Behälters von einem Füllort in eine Heizzone nach dem Füllen der ersten Schicht und vor dem Erhitzen, vorzugsweise wobei die Heizzone eine Infrarotwärmequelle umfasst, mehr bevorzugt wobei die Infrarotwärmequelle unter dem Behälters konfiguriert ist.

3. Verfahren nach Anspruch 1, ferner umfassend das Transportieren des Behälters in eine Nicht-Heizzone nach dem Erhitzen und vor dem Füllen der zweiten Schicht.

4. Verfahren nach Anspruch 1, wobei das Galactomannan Guar ist.

5. Verfahren nach Anspruch 1, wobei die Soße ferner eine zusätzliche Komponente in einer Menge von weniger als oder etwa 10 Gew.-% umfasst.

6. Verfahren nach Anspruch 5, wobei die zusätzliche Komponente ausgewählt ist aus der Gruppe bestehend aus einem Salz, einem Zucker einer Aminosäure und Mischungen davon.

7. Verfahren nach Anspruch 1, wobei die zweite Temperatur von etwa 30 °C bis etwa 70 °C beträgt.

8. Verfahren nach Anspruch 1, wobei die erste Schicht von etwa 5 % bis etwa 20 % des Gesamtgewichts des Tierfutters ausmacht.

9. Verfahren nach Anspruch 1, ferner umfassend ein Versiegeln des Behälters, umfassend die erste Schicht und die zweite Schicht, und vorzugsweise ferner umfassend ein Autoklavieren des versiegelten Behälters.

10. Verfahren nach Anspruch 1, wobei die zweite essbare Zusammensetzung aus einem brotartigen Futter, einer Fleischemulsion und einer Mousse ausgewählt ist.

11. Verfahren nach Anspruch 1, wobei die zweite Schicht, umfassend die zweite essbare Zusammensetzung, im Wesentlichen durch die erste Schicht, umfassend die Soße, bedeckt ist, wenn der Behälter umgedreht wird und das Tierfutter aus dem Behälter freigegeben wird.

12. Mehrschichtiges Haustierfutter, umfassend:
eine erste essbare Zusammensetzung, die eine Soße ist, umfassend zu etwa 0,1 Gew.-% bis etwa 5,0 Gew.-% Methylcellulose und zu etwa 0,1 Gew.-% bis etwa 5,0 Gew.-% Guar; und
eine zweite essbare Zusammensetzung, wobei die erste essbare Zusammensetzung und die zweite essbare Zusammensetzung diskrete Schichten sind.

13. Mehrschichtiges Haustierfutter nach Anspruch 12, wobei die zweite essbare Zusammensetzung eine Fleischemulsion ist.

14. Mehrschichtiges Haustierfutter nach Anspruch 12, wobei das Gewichtsverhältnis der ersten essbaren Zusammensetzung zu der zweiten essbaren Zusammensetzung von etwa 20 : 80 bis etwa 40 : 60 beträgt.

## Revendications

1. Procédé de fabrication d'aliments pour animaux de compagnie à plusieurs couches comprenant :
la préparation d'une première composition comestible qui est une sauce comprenant d'environ 0,1 % en poids à environ 5,0 % en poids de méthylcellulose et d'environ 0,1 % en poids à environ 5,0 % en poids de galactomannane, à une première température, dans lequel la première température est d'environ 10 °C à environ 26 °C ;
le remplissage d'une première couche comprenant la sauce dans un récipient ;
le chauffage du récipient comprenant la sauce à une seconde température pour faire gélifier la sauce ;
le remplissage d'une seconde couche comprenant une seconde composition comestible dans le récipient et sur la première couche, dans lequel la première couche et la seconde couche sont des couches distinctes.

2. Procédé selon la revendication 1, comprenant en outre le transport du récipient d'un emplacement de remplissage dans une zone de chauffage après le remplissage de la première couche et avant le chauffage, de préférence, dans lequel la zone de chauffage comprend une source de chaleur infrarouge, plus préférablement, dans lequel la source de chaleur infrarouge est configurée sous le récipient.

3. Procédé selon la revendication 1, comprenant en outre le transport du récipient dans une zone non chauffée après le chauffage et avant le remplissage de la seconde couche.

4. Procédé selon la revendication 1, dans lequel le galactomannane est du guar.

5. Procédé selon la revendication 1, dans lequel la sauce comprend en outre un composant supplémentaire en quantité inférieure à ou d'environ 10 % en poids.

6. Procédé selon la revendication 5, dans lequel le composant supplémentaire est choisi dans le groupe constitué d'un sel, un sucre, un acide aminé et des combinaisons de ceux-ci.

7. Procédé selon la revendication 1, dans lequel la seconde température va d'environ 30 °C à environ 70 °C.

8. Procédé selon la revendication 1, dans lequel la première couche va d'environ 5 % à environ 20 % du poids total des aliments pour animaux de compagnie.

9. Procédé selon la revendication 1, comprenant en outre le scellement du récipient comprenant la première couche et la seconde couche et, de préférence, comprenant en outre la stérilisation à l'autoclave du récipient scellé.

10. Procédé selon la revendication 1, dans lequel la seconde composition comestible est choisie parmi un aliment de type pain, une émulsion de viande et une mousse.

11. Procédé selon la revendication 1, dans lequel la seconde couche comprenant la seconde composition comestible est sensiblement recouverte par la première couche comprenant la sauce lorsque le récipient est renversé et que les aliments pour animaux de compagnie sont libérés du récipient.

12. Aliments pour animaux de compagnie à plusieurs couches comprenant :
une première composition comestible qui est une sauce comprenant environ 0,1 % en poids à environ 5,0 % en poids de méthylcellulose et environ 0,1 % en poids à environ 5,0 % en poids de guar ; et
une seconde composition comestible, dans lesquels la première composition comestible et la seconde composition comestible sont des couches distinctes.

13. Aliments pour animaux de compagnie à plusieurs couches selon la revendication 12, dans lesquels la seconde composition comestible est une émulsion de viande.

14. Aliments pour animaux de compagnie à plusieurs couches selon la revendication 12, dans lesquels le rapport pondéral entre la première composition comestible et la seconde composition comestible va d'environ 20:80 à environ 40:60.
